# EUROPÄISCHE PATENTSCHRIFT

(11) **EP 4 731 589 B1**
(45) Veröffentlichungstag und Bekanntmachung des Hinweises auf die Patenterteilung: **22.07.2026**
(21) Anmeldenummer: 24761204.7
(22) Anmeldetag: 22.08.2024
(51) Int. Cl.: C04B 7/52, C04B 20/02

(54) **ZWEISTUFIGES VERMAHLEN VON MATERIAL ZUR HERSTELLUNG EINES BINDEMITTELS, INSBESONDERE EINES ZEMENTS**
TWO-STAGE GRINDING OF MATERIAL FOR PRODUCTION OF A BINDER, ESPECIALLY A CEMENT
BROYAGE EN DEUX ÉTAPES DE MATÉRIAU POUR LA PRODUCTION D'UN LIANT, EN PARTICULIER D'UN CIMENT

(30) Priorität: 25.08.2023 DE 102023122884; 25.08.2023 LU 103190
(43) Veröffentlichungstag der Anmeldung: 29.04.2026
(73) Patentinhaber: thyssenkrupp Polysius GmbH, 59269 Beckum (DE); thyssenkrupp AG, 45143 Essen (DE)
(72) Erfinder: SCHEFER, Dirk, 59320 Ennigerloh (DE); SCHMITZ, Thomas, 59302 Oelde (DE); WILCZEK, Michael, 48231 Warendorf (DE); SACHSE, Carsten, 48147 Münster (DE)
(74) Vertreter: thyssenkrupp Intellectual Property GmbH
(86) Internationale Anmeldenummer: PCT/EP2024/073518
(87) Internationale Veröffentlichungsnummer: WO 2025/045706

(56) Entgegenhaltungen:
- EP-B1- 2 604 345
- WO-A1-2007/019602
- CN-B- 101 282 790

## Beschreibung

Die Erfindung betrifft ein Verfahren zur zweistufigen Vermahlung und zur Herstellung eines Bindemittels, insbesondere eines Zements, wobei durch die zweite Stufe der Vermahlung mit hohem Energieeintrag eine Reaktivitätserhöhung möglich ist.

Aus der DE 10 2017 114 831 A1 ist ein Verfahren zur Aufarbeitung von Flugasche sowie eine Anlage und ein Verfahren zur Herstellung von Zement bekannt.

Aus der DE 10 2017 115 994 A1 ist ein zweistufiger Mahlkreislauf und ein Verfahren zur Herstellung eines gemahlenen Produkts mittels einer zweistufigen Mahlung bekannt.

Aus der DE 10 2017 117 985 A1 ist ein Verfahren und eine Anlage zur Herstellung von Zement bekannt.

Aus der DE 10 2019 008 945 B4 ist ein Verfahren zur Aufarbeitung von Flugasche bekannt.

Aus der DE 19 501 616 A1 ist ein Mahlverfahren und eine Anlage zur Zerkleinerung von Mahlgut bekannt.

Außerdem sind Verfahren zur mechanischen Aktivierung bekannt.

Aus der WO 2017 / 008 863 A1 ist ein Verfahren und eine Anlagenanordnung zum Aufbereiten und Aktivieren eines Rohstoffes bekannt.

Aus der EP 3 909 682 A1 ist ein Verfahren und eine Wälzmühle zum thermomechanischen Aktivieren eines Tongemisches bekannt.

Aus der DE 10 2015 106 109 A1 ist ein Verfahren zur tribochemischen Aktivierung von Bindemitteln und Zusatzstoffen bekannt.

Aus der DE 10 2017 114 831 A1 ist ein Verfahren zur Aufarbeitung von Flugasche und ein Verfahren zur Herstellung von Zement bekannt.

Aus der nachveröffentlichten DE 10 2023 106 210 ist die mechanische Aktivierung von Tonen bekannt.

Aus der nachveröffentlichten DE 10 2023 106 217 ist die mechanische Aktivierung von Tonen bekannt.

Aus der nachveröffentlichten DE 10 2023 106 221 ist die kombinierte mechanische und thermische Aktivierung von Tonen bekannt.

Aus der nachveröffentlichten DE 10 2023 106 222 ist die Farboptimierung bei der mechanischen Aktivierung von Tonen bekannt.

Aus der CN 101 282 790 B ist ein Verfahren zur Erhöhung der Effizienz beim Mahlen von Erzen, Mineralien und Konzentraten bekannt.

Aufgabe der Erfindung ist es, ein Mahlverfahren für ein Bindemittel bereitzustellen, welches eine optimierte Produktqualität ermöglicht.

Gelöst wird diese Aufgabe durch das Verfahren mit den in Anspruch 1 angegebenen Merkmalen. Vorteilhafte Weiterbildungen ergeben sich aus den Unteransprüchen, der nachfolgenden Beschreibung sowie der Zeichnung.

Eine Vorrichtung zur Durchführung des erfindungsgemäßen Verfahrens dient zum Vermahlen eines mineralischen Materials, insbesondere zur Herstellung von Zement. Beispiele für diese mineralischen Materialien sind entsprechend Klinker, Gips, aktivierte Tone, Sand, Altzementstein, Schlacken und dergleichen. Die Vorrichtung weist eine erste Mahlvorrichtung und eine der ersten Mahlvorrichtung nachgeschaltete zweite Mahlvorrichtung auf. Das zu vermahlende mineralische Material durchläuft somit zunächst die erste Mahlvorrichtung und anschließend die zweite Mahlvorrichtung. Die erste Mahlvorrichtung ist zur Erreichung einer Feinheit von 2500 bis 5000 cm²/g nach Blaine ausgebildet. Dieses entspricht einer Feinheit, die ungefähr der Feinheit der einzelnen Komponenten bei üblichen Zementen entspricht. Somit ist die erste Mahlvorrichtung eben eine normale Mahlvorrichtung und nicht zur Erreichung einer mechano-chemischen Aktivierung ausgebildet. Damit kann die erste Mahlvorrichtung wesentlich einfacher ausgeführt sein als die zweite Mahlvorrichtung. Die zweite Mahlvorrichtung weist einen Energieeintrag von wenigstens 100 kW/m³ auf. Dieses entspricht einem vergleichsweise hohen Energieeintrag einer Feinstmühle und geht über die übliche eingebrachte Energiemenge hinaus. Ziel ist es, eine besonders vorteilhafte Eigenschaft des Bindemittels zu erreichen, was wiederum ermöglicht, den Anteil an Substituten zu erhöhen und so wertvolle Primärrohstoffe zu schonen. Die zweite Mahlvorrichtung ist damit wesentlich aufwändiger als die erste Mahlvorrichtung, Durch die Kombination kann nun die erste Zerkleinerung in der ersten Mahlvorrichtung erfolgen und zwar ungefähr bis zur Grenzfeinheit, also der durch Mahlung erreichbaren Feinheit. Dieses kann eben in einer einfacheren ersten Mahlvorrichtung gemacht werden, erst danach erfolgt die mechano-chemische Aktivierung in der zweiten Mahlvorrichtung, die wesentlich aufwändiger und auch teurer ist. Da hier aber eben die Zerkleinerung nicht mehr vorgenommen werden muss, kann die zweite Mahlvorrichtung dadurch kleiner dimensioniert werden, da diese nur noch die mechano-chemische Aktivierung zu leisten hat.

Natürlich können die erste Mahlvorrichtung und die zweite Mahlvorrichtung auch gleich ausgebildet werden. Hierdurch kann eine begrenzte Redundanz geschaffen werden, da eine mechano-chemische Aktivierung auch nach einem Ausfall einer Mahlvorrichtung in reduzierten Mengen auf der verbleibenden Mahlvorrichtung ohne das erfindungsgemäße Verfahren und dessen Vorteile durchgeführt werden kann.

In einer weiteren Ausführungsform der Erfindung ist die zweite Mahlvorrichtung eine Rührwerkskugelmühle. Besonders bevorzugt wird die Rührwerkskugelmühle im Durchlauf betrieben, also kontinuierlich. Hierdurch sind zum einen die hohen Energieeinträge technisch leicht umsetzbar, zum anderen kann der Durchsatz und die Reihenschaltung mit einer kontinuierlichen ersten Mahlvorrichtung in einfacher Weise realisiert werden.

In einer weiteren Ausführungsform der Erfindung weist die zweite Mahlvorrichtung einen Energieeintrag von wenigstens 200 kW/m³ auf. Hierdurch ist der Effekt weiter zu verstärken, was insbesondere die Erhöhung des Substitutsanteils ermöglicht.

In einer weiteren Ausführungsform der Erfindung ist die erste Mahlvorrichtung eine Vertikalrollenmühle oder eine Gutbettwalzenmühle. Diese Typen haben sich bei der Vermahlung von Vorprodukten zum fertigen Zement bewährt.

In einer weiteren Ausführungsform der Erfindung weist die erste Mahlvorrichtung einen Mahlkreis mit einer Größentrennvorrichtung auf. Das bedeutet, dass das grobe Mahlgut in der ersten Mahlvorrichtung zermahlen und anschließend in die Größentrennvorrichtung überführt wird. Dort wird das Mahlgut in eine Grobfraktion und eine Feinfraktion aufgetrennt, die Grobfraktion zu ersten Mahlvorrichtung zur weiteren Zerkleinerung zugeführt und die Feinfraktion weiter zu zweiten Mahlvorrichtung geführt. Dadurch ist eine höhere Feinheit in der ersten Mahlvorrichtung einfacher zu erreichen. Bevorzugt ist die Größentrennvorrichtung ein Sichter. Hierbei kann der Sichter auch direkt in ein Gehäuse mit der ersten Mahlvorrichtung integriert sein.

In einer weiteren Ausführungsform der Erfindung weist die Vorrichtung zwei parallel geschaltete zweite Mahlvorrichtungen auf. Hierdurch kann zum einen der Durchsatz erhöht werden, alternativ können die beiden parallelen zweiten Mahlvorrichtungen aber gezielt zur Erzeugung zwei unterschiedlicher Produktqualitäten genutzt werden. Beispielsweise und bevorzugt sind die zwei parallel geschalteten zweiten Mahlvorrichtungen Rührwerkskugelmühlen und die zwei parallel geschalteten zweiten Mahlvorrichtungen sind mit unterschiedlichen Kugeln befüllt.

In einer weiteren Ausführungsform der Erfindung beträgt das Verhältnis der eingebrachten Mahlenergie zwischen der ersten Mahlvorrichtung und der zweiten Mahlvorrichtung höchstens 2:1. Beispielsweise kann die erste Mahlvorrichtung eine Mahlenergie von 2 MW einbringen, die zweite Mahlvorrichtung von 1 MW, was einem Verhältnis von 2:1 entspricht. Ebenso könnte bei gleicher Gesamtenergie die erste Mahlvorrichtung 1,5 MW und die zweite Mahlvorrichtung 1,5 MW eintragen, was dann einem Verhältnis von 1:1 entspricht. Da die erste Stufe in der ersten Mahlvorrichtung schon eine Zerkleinerung auf eine ungefähr geeignete Feinheit erzeugt, wird die in der zweiten Mahlvorrichtung eingebrachte Energie zu einem großen Teil zur Produktoptimierung genutzt, was wiederum es ermöglicht, den Substitutanteil zu erhöhen.

In einer weiteren Ausführungsform der Erfindung ist zwischen der ersten Mahlvorrichtung und der zweiten Mahlvorrichtung eine Eduktzuführung angeordnet. Es kann also dem in der ersten Mahlvorrichtung zerkleinerten mineralischem Material weiteres Material zugeführt werden, insbesondere, wenn dieses bereits die notwendige Feinheit aufweist. Hierbei kann es sich beispielsweise um eines der Vorprodukte ausgewählt aus der Gruppe umfassend Flugasche, kalzinierter Ton, Ton, Hüttensand, Kalkstein, natürliches und natürlich getempertes Puzzolangebrannter Schiefer, Silikatstaub handeln. Weist die erste Mahlvorrichtung eine Größentrennvorrichtung auf, so kann das weitere Material auch beispielsweise und bevorzugt auf die Größentrennvorrichtung aufgetragen werden.

Die Erfindung betrifft ein Verfahren zur Herstellung eines Bindemittels aus wenigstens einem ersten Vorprodukt durch Vermahlen. Üblicherweise werden die einzelnen Komponenten eines Zements vor dem Vermahlen vermischt und gemeinsam vermahlen und dadurch innig vermischt. Das Material wird zunächst in einer ersten Mahlvorrichtung zu einem ersten Mahlgut mit einer Feinheit von 2500 bis 5000 cm²/g nach Blaine gemahlen, also in einem Bereich, in dem eine normale Vermahlung erfolgt, jedoch nah an die Grenzfeinheit, also die Größe, bei der ein weiterer Eintrag von Mahlenergie zu keiner Zerkleinerung der Partikel mehr führt.. Das erste Mahlgut wird in eine zweite Mahlvorrichtung eingebracht. Das Material wird in der zweiten Mahlvorrichtung mit einem Energieeintrag von wenigstens 100 kW/m³ zu einem zweiten Mahlgut gemahlen. Durch die sehr intensive Vermahlung im zweiten Schritt eines bereits vergleichsweise feinen Materials wird dieses positiv beeinflusst, nämlich mechano-chemisch aktiviert, sodass die Bindeeigenschaften verbessert werden. Dadurch ist es möglich, beispielsweise auch den Substitutanteil im Zement zu erhöhen und so wertvolle primäre Rohstoffe zu schonen. Der zweite Schritt in der zweiten Mahlvorrichtung erfolgt also in dem Bereich, in dem die zusätzlich eingebrachte Mahlenergie eben nicht mehr zu einer Verkleinerung der Partikel führt, sondern indem vielmehr ein erneutes Partikelwachstum beim Mahlen erkennbar ist. Die zusätzlich eingebrachte Mahlenergie wird anteilig zur mechano-chemischen Aktivierung umgesetzt, es werden also gezielt die chemischen Bindungsverhältnisse geändert, sodass sich das Produkt als wesentlich besseres Bindemittel eignet. Durch die Zweistufigkeit kann der erste Bereich der Zerkleinerung in einer einfacheren ersten Mahlvorrichtung durchgeführt werden, während die mechano-chemische Aktivierung in der zweiten Mahlvorrichtung durchgeführt wird, welche dadurch kleiner ausgeführt sein kann.

Die mechano-chemische Aktivierung besteht aus drei Phasen beziehungsweise Stadien: Im ersten Stadium sinkt die Partikelgröße (mehr oder weniger linear) zum Energieeintrag (Rittinger-Zone). Vereinfacht ausgedrückt, je mehr man mahlt, um so feiner wird das Produkt. Dieses soll erfindungsgemäß in erster Näherung in der ersten Mahlvorrichtung erfolgen. Hierfür gibt es jedoch eine Grenze, eine Partikelgröße, die kaum mehr zu unterschreiten ist. Ab diesem Punkt kommt eine zweite Stufe, bei der sich die Partikelgröße mit weiterem Energieeintrag nicht weiter verändern lässt (Aktivierungs- und Aggregations-Zone). In diesem Stadium kommt es zur Zerstörung von kristallographischen Strukturen durch Lösen von Atombindungen, einzelne Atome oder ganze Gruppen von Atomen werden durch andere Atome oder Gruppen anderer Atome ersetzt. Insbesondere auf den Partikeloberflächen wird die anfängliche Kristallstruktur, sowie Bindungstyp und Oxidationsstufen von Atomen, aufgrund hoher Energieübertragung und nachfolgende chemische Reaktionen, verändert. Aus wirtschaftlichen Gründen vermeidet man daher bei einer normalen Vermahlung, wo nur die Schaffung von Oberflächen erwartet wird, den Übergang von der ersten Stufe zur zweiten Stufe, die jedoch für die mechano-chemische Aktivierung notwendig ist. Erhöht man die Energiezufuhr noch weiter, so kann eine dritte Stufe erreicht werden, bei der aufgrund der Agglomeration von Nanopartikeln wieder ein Ansteigen der Partikelgröße feststellbar ist (Agglomerations-Zone), was sich positiv auf die Verarbeitbarkeit von aktiviertem Tonzementbeton auswirkt. Dieser Bereich wird bei einer Vermahlung daher noch viel eher vermieden, da mit geringerem Aufwand ein besseres Ergebnis in Bezug auf die Partikelgrößenverteilung erzielt werden kann. Die zweite und dritte Stufe werden erfindungsgemäß in der zweiten Mahlvorrichtung durchgeführt.

Es hat sich jedoch herausgestellt, dass es bei hohen Energieeinträgen, also in der zweiten Stufe, zu Veränderungen des Materials selbst kommt, die beispielsweise bei Tonen, ebenso wie eine thermische Aktivierung, zu einer Aktivierung führt, also zu einer Reaktivität, die die Verwendung als Bindemittel (und damit als Klinkerersatz) ermöglicht. Daher kann bei derart hohen Energieeinträgen auf eine anschließende thermische Behandlung verzichtet werden.

Hierbei hat sich jedoch herausgestellt, dass der Energiebedarf für eine reine mechano-chemische Aktivierung höher sein kann als für eine thermische Aktivierung. Daher erscheint das erfindungsgemäße Verfahren zunächst einmal nachteilig gegenüber der konventionellen thermischen Aktivierung. Es hat sich jedoch gezeigt, dass das erfindungsgemäße Verfahren, trotz des vergleichsweise wahrscheinlich hohen, insbesondere elektrischen, Energiebedarfs, vorteilhaft insbesondere für die Aktivierung von thermisch schwierig zu aktivierenden Tonen ist. Gerade bei komplexen Ausgangsstoffen, wie zum Beispiel Tonen, kommt es bei einer thermischen Aktivierung regelmäßig zu mehreren negativen Effekten. Zum einen ist bekannt, dass beispielsweise aus Tonen bei erhöhter Temperatur Stoffe gasförmig austreten können, die eine aufwändigere Abgasreinigung erfordern. Durch den Verzicht auf höhere Temperaturen kann dieses vermieden werden. Zum anderen werden bei erhöhter thermischer Aktivierungstemperatur oftmals farbgebende Komponenten, beispielsweise Eisenverbindungen, aufoxidiert, was im Falle von stark eisenhaltigen Tonen zu einer ungewünschten Rotfärbung des Produkts führt. Um dieses zu vermeiden ist entweder eine Schutzgasatmosphäre oder eine anschließende Reduktion notwendig, was beides verfahrenstechnisch aufwändig ist. Somit wird zwar für das erfindungsgemäße Verfahren für den eigentlichen Aktivierungsschritt der Energiebedarf erhöht, es vereinfacht sich aber die Abgasbehandlung und eine anschließende Reduzierung kann vermieden werden. Darüber hinaus wird beim thermischen Aktivierungsprozess immer noch Kohlendioxid freigesetzt, das aus fossilen Brennstoffen oder Abfallbrennstoffen stammt, aber auch aus der Entsäuerung von Carbonatmineralen während des Kalzinierens, was schließlich einen Kohlenstoffabscheidungsprozess erfordert. Das erfindungsgemäße Verfahren erfordert lediglich elektrische Energie und es wurde gezeigt, dass die Carbonatmineralen im mechano-chemischen Aktivierungsprozess nicht zersetzt werden, sondern als amorphisiertes und reaktives Material im aktivierten Tonprodukt erhalten bleiben. So kann der gesamte Vorgang der Aktivierung zur Herstellung eines marktfähigen Bindemittels effizient vereinfacht und decarbonisiert werden. Des Weiteren weisen unterschiedliche Tonminerale unterschiedliche optimale Aktivierungstemperaturen auf. So werden beispielsweise Minerale der Kaolin- und der Chloritgruppe bei deutlich niedrigeren Temperaturen aktiviert als zum Beispiel Minerale der Glimmergruppe (Muskovit, Illit und andere). Wählt man bei Tonen, die Minerale dieser Gruppen enthalten, für die thermische Aktivierung die optimale Aktivierungstemperatur von Kaolinit, so werden Minerale wie Muskovit und Illit noch nicht aktiviert. Wählt man hingegen für die thermische Aktvierung die deutlich höhere Aktivierungstemperatur von Muskovit und Illit, so kommt es, aufgrund der Bildung neuer Mineralphasen, insbesondere Spinelle, zum Überbrennen des Kaolinit, was eine Deaktivierung zur Folge hat. Diese Differenzierung der Tonminerale bezüglich der optimalen Aktivierungstemperatur entfällt hingegen bei der mechano-chemischen Aktivierung.

In einer weiteren Ausführungsform der Erfindung wird dem ersten Mahlgut ein zweites Vorprodukt zugeführt. Das zweite Vorprodukt ist bevorzugt ausgewählt aus der Gruppe umfassend Flugasche, kalzinierter Ton, Ton, Hüttensand, Kalkstein, natürliches und natürlich getempertes Puzzolan, gebrannter Schiefer, Silikatstaub.

In einer weiteren Ausführungsform der Erfindung wird das zweite Mahlgut auf eine Feinheit von 5000 bis 15000 cm²/g nach Blaine gemahlen. Bevorzugt wird das zweite Mahlgut auf eine Feinheit von 7000 bis 15000 cm²/g nach Blaine gemahlen. Besonders bevorzugt wird das das zweite Mahlgut auf eine Feinheit von 7500 bis 15000 cm²/g nach Blaine gemahlen.

In einer weiteren Ausführungsform der Erfindung ist das Vorprodukt oder die Vorprodukte ausgewählt ist aus der Gruppe umfassend Klinker, Gips, aktivierte Tone, Schlacke, beispielsweise Hüttensand, Sand, Altzementstein.

In einer weiteren Ausführungsform der Erfindung wird das Material in der zweiten Mahlvorrichtung mit einem Energieeintrag von wenigstens 200 kW/m³ zu einem zweiten Mahlgut gemahlen.

Nachfolgend ist die erfindungsgemäße Vorrichtung anhand eines in der Zeichnung dargestellten Ausführungsbeispiels näher erläutert.

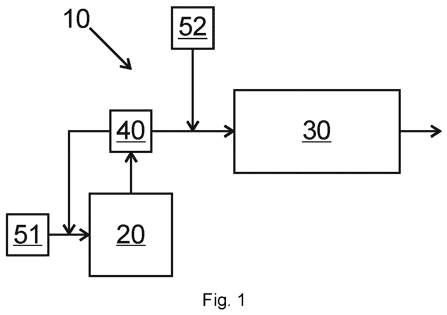

Fig. 1 beispielhafte Ausführungsform

In Fig. 1 ist eine beispielhafte Ausführungsform einer erfindungsgemäßen Vorrichtung 10 gezeigt. Ein erstes Vorprodukt 51, beispielsweise Klinker, wird einer ersten Mahlvorrichtung 20, beispielsweise einer Vertikalrollenmühle, zugeführt und beispielsweise auf eine Feinheit von 4000 cm²/g vermahlen. Das Mahlgut wird einer Größentrennvorrichtung 40 zugeführt. Die Grobfraktion wird erneut der ersten Mahlvorrichtung 20 zugeführt. Die Feinfraktion wird mit einem zweiten Vorprodukt 52, beispielsweise aktivierter Ton, versehen und einer zweiten Mahlvorrichtung 30 zugeführt. Dort wird das Material mit einem Energieeintrag von 300 kW/m³ auf eine Feinheit von 10000 cm²/g vermahlen und so das fertige Produkt, ein Bindemittel, erhalten.

### Bezugszeichen

- 10: Vorrichtung
- 20: erste Mahlvorrichtung
- 30: zweite Mahlvorrichtung
- 40: Größentrennvorrichtung
- 51: erstes Vorprodukt
- 52: zweites Vorprodukt

## Patentansprüche

1. Verfahren zur Herstellung eines Bindemittels aus wenigstens einem ersten Vorprodukt (51) durch Vermahlen, wobei das Material zunächst in einer ersten Mahlvorrichtung (20) zu einem ersten Mahlgut mit einer Feinheit von 2500 bis 5000 cm²/g nach Blaine gemahlen wird, wobei das erste Mahlgut in eine zweite Mahlvorrichtung (30) eingebracht wird, wobei das Material in der zweiten Mahlvorrichtung (30) mit einem Energieeintrag von wenigstens 100 kW/m³ zu einem zweiten Mahlgut gemahlen wird.

2. Verfahren nach Anspruch 1, **dadurch gekennzeichnet, dass** dem ersten Mahlgut ein zweites Vorprodukt (51) zugeführt wird.

3. Verfahren nach einem der Ansprüche 1 bis 2, **dadurch gekennzeichnet, dass** das zweite Mahlgut auf eine Feinheit von 5000 bis 15000 cm²/g nach Blaine gemahlen wird.

4. Verfahren nach Anspruch 3, **dadurch gekennzeichnet, dass** das zweite Mahlgut auf eine Feinheit von 7000 bis 15000 cm²/g nach Blaine gemahlen wird.

5. Verfahren nach einem der Ansprüche 1 bis 4, **dadurch gekennzeichnet, dass** das Vorprodukt (51, 52) oder die Vorprodukte (51, 52) ausgewählt ist aus der Gruppe umfassend Klinker, Gips, aktivierte Tone, Schlacke, beispielsweise Hüttensand, Sand, Altzementstein.

6. Verfahren nach einem der Ansprüche 1 bis 5, **dadurch gekennzeichnet, dass** das Material in der zweiten Mahlvorrichtung (30) mit einem Energieeintrag von wenigstens 200 kW/m³ zu einem zweiten Mahlgut gemahlen wird.

## Claims

1. A process for producing a binder from at least one first precursor (51) by grinding, wherein the material is first ground in a first grinding apparatus (20) to obtain a first regrind having a Blaine fineness of 2500 to 5000 cm²/g, wherein the first regrind is introduced into a second grinding apparatus (30), wherein the material in the second grinding apparatus (30) is ground with an input of energy of at least 100 kW/m³ to obtain a second regrind.

2. The process as claimed in claim 1, **characterized in that** a second precursor (51) is supplied to the first regrind.

3. The process as claimed in either of claims 1 and 2, **characterized in that** the second regrind is ground to a Blaine fineness of 5000 to 15 000 cm²/g.

4. The process as claimed in claim 3, **characterized in that** the second regrind is ground to a Blaine fineness of 7000 to 15 000 cm²/g.

5. The process as claimed in any of claims 1 to 4, **characterized in that** the precursor(s) (51, 52) is/are selected from the group comprising clinker, plaster, activated clays, slags, for example ground granulated blast-furnace slag, sand, and old cementstone.

6. The process as claimed in any of claims 1 to 5, **characterized in that** the material is ground in the second grinding apparatus (30) with an input of energy of at least 200 kW/m³ to obtain a second regrind.

## Revendications

1. Un procédé pour produire un liant à partir d'au moins un premier précurseur (51) par broyage, dans lequel le matériau est d'abord broyé dans un premier appareil de broyage (20) pour obtenir un premier rebroyé ayant une finesse Blaine de 2500 à 5000 cm2/g, dans lequel le premier rebroyé est introduit dans un second appareil de broyage (30), dans lequel le matériau dans le second appareil de broyage (30) est broyé avec un apport d'énergie d'au moins 100 kW/m3 pour obtenir un second rebroyé.

2. Le procédé selon la revendication 1, **caractérisé en ce qu'**un second précurseur (51) est fourni au premier rebroyé.

3. Le procédé selon l'une quelconque des revendications 1 et 2, **caractérisé en ce que** le second rebroyé est broyé à une finesse Blaine de 5000 à 15 000 cm2/g.

4. Le procédé selon la revendication 3, **caractérisé en ce que** le second rebroyé est broyé à une finesse Blaine de 7000 à 15 000 cm2/g.

5. Le procédé selon l'une quelconque des revendications 1 à 4, **caractérisé en ce que** le(s) précurseur(s) (51, 52) est/sont sélectionné(s) dans le groupe comprenant le clinker, le plâtre, les argiles activées, les scories, par exemple le laitier granulé de haut fourneau moulu, le sable, et l'ancienne pierre de ciment.

6. Le procédé selon l'une quelconque des revendications 1 à 5, **caractérisé en ce que** le matériau est broyé dans le second appareil de broyage (30) avec un apport d'énergie d'au moins 200 kW/m3 pour obtenir un second rebroyé.
